# EUROPEAN PATENT SPECIFICATION

(11) **EP 3 955 650 B1**
(45) Date of publication and mention of the grant of the patent: **15.11.2023**
(21) Application number: 20190738.3
(22) Date of filing: 12.08.2020
(51) Int. Cl.: H04W 48/18, H04W 60/00

(54) **ACCESS MANAGEMENT COMPONENT AND METHOD FOR CONTROLLING USAGE OF A MOBILE COMMUNICATION SYSTEM**
ZUGRIFFSVERWALTUNGSKOMPONENTE UND VERFAHREN ZUR STEUERUNG DER NUTZUNG EINES MOBILKOMMUNIKATIONSSYSTEMS
COMPOSANT DE GESTION D'ACCÈS ET PROCÉDÉ DE COMMANDE DE L'UTILISATION D'UN SYSTÈME DE COMMUNICATION MOBILE

(43) Date of publication of application: 16.02.2022
(73) Proprietor: NTT DoCoMo, Inc., Tokyo 100-6150 (JP)
(72) Inventor: SAMA, Malla Reddy, 80687 Munich (DE); HIKOSAKA, Maoki, Tokyo, 100-6150 (JP); MINOKUCHI, Atsushi, Tokyo, 100-6150 (JP); AOYAGI, Kenichiro, Tokyo, 100-6150 (JP); AL-BAKRI, Ban, Tokyo, 100-6150 (JP)
(74) Representative: Viering, Jentschura & Partner mbB Patent- und Rechtsanwälte

(56) References cited:
- CN-A- 111 194 095
- "3rd Generation Partnership Project; Technical Specification Group Services and System Aspects; Procedures for the 5G System (5GS); Stage 2 (Release 16)", 3GPP DRAFT; 23502-G51_REMOVAL_POSTPONED_CR2317R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 6 August 2020 (2020-08-06), XP051935323, Retrieved from the Internet: URL:https://ftp.3gpp.org/tsg_sa/WG2_Arch/L atest_SA2_Specs/DRAFT_INTERIM/Archive/2350 2-g51_removal_postponed_CR2317R1.zip 23502-g51_removal_postponed_CR2317R1.docx [retrieved on 2020-08-06]
- NTT DOCOMO: "Solution #4 update", 3GPP DRAFT; S2-1812390, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. West Palm Beach, USA; 20181126 - 20181130 20 November 2018 (2018-11-20), XP051563903, Retrieved from the Internet: URL:http://www.3gpp.org/ftp/Meetings%5F3GP P%5FSYNC/SA2/Docs/S2%2D1812390%2Ezip [retrieved on 2018-11-20]

## Description

### Technical Field

The present disclosure relates to an access management component and a method for controlling usage of a mobile communication system.

### Background

It is planned that for 5G (Fifth Generation) mobile communication, non-public networks may be deployed. A 5G non-public network (NPN) is a 5GS (5G communication system) deployed for non-public use (e.g. deployed by an enterprise for its members of the enterprise). An NPN may be deployed as standalone NPN (SNPN) which means that the NPN is not relying on network functions provided by a PLMN (Public Land Mobile Network) or as a Public Network Integrated NPN (PNI-NPN), which means that the NPN is deployed with the support of a PLMN.

There exist various use cases for non-public networks and efficient approaches for controlling usage of a mobile communication system, which includes a public mobile communication network and a non-public network, are therefore desirable.

Document CN111194095 discloses that a non-public network contracting terminal may also sign on a public network and/or a contracted terminal on a public network may also sign on a non-public network. The terminal can access public network services through non-public networks (for example: Public Land Mobile Network (PLMN) services) or the terminal can access non-public network services via a public network (access to selected non-public network services via a PLMN).

### Summary

According to one embodiment, an access management component of a mobile communication network is provided as defined in claim 1.

According to a further embodiments, a method for controlling usage of a mobile communication system performed by an access management component is provided as defined in claim 11.

### Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: shows a public integrated non-public network (PNI-NPN).
- Figure 3: shows a stand-alone non-public network (SNPN).
- Figure 4: illustrates a use case of an NPN.
- Figure 5: illustrates a further use case for an NPN.
- Figure 6: shows an example of applications and LADNs (Local Area Data Networks) available in a PLMN and/or in an NPN.
- Figure 7: shows a message flow diagram for managing application availability in the scenario of figure 6.
- Figure 8: shows a message flow diagram for managing LADN availability in the scenario of figure 6.
- Figure 9: shows a message flow diagram for steering a mobile terminal from a PLMN to an SNPN.
- Figure 10: shows an access management component of a mobile communication network.
- Figure 11: shows a flow diagram illustrating a method for controlling usage of a mobile communication system.

### Detailed description

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below: Example 1 is an access management component of a mobile communication network including a receiver configured to receive a registration request from a mobile terminal, a determiner configured to determine whether the mobile terminal is to use one or more communication services by means of a non-public network and a transmitter configured to transmit a message to the mobile terminal specifying that for usage and/or availability of the one or more communication services, the mobile terminal is to register to the non-public network or access the one or more communication services via the non-public network if the mobile terminal is to use the one or more communication services by means of the non-public network.

Example 2 is the access management component of Example 1, wherein the mobile communication network is a public network.

Example 3 is the access management component of Example 1 or 2, wherein the one or more communication services are services which are not available to the mobile terminal via the mobile communication network.

Example 4 is the access management component of any one of Examples 1 to 3, wherein the one or more communication services are services restricted for usage to the non-public network.

Example 5 is the access management component of any one of Examples 1 to 4, wherein the determiner is configured to determine that the mobile terminal is to use the one or more communication services by means of the non-public network if the communication quality provided by the mobile communication network at the location of the mobile terminal is below a predetermined threshold.

Example 6 is the access management component of any one of Examples 1 to 5, wherein the registration request includes an indication that the mobile terminal supports usage of the non-public network and the determiner is configured to determine that the mobile terminal is to use one or more communication services by means of a non-public network or steer the mobile terminal to a non-public network at least partially in reaction to the indication.

Example 7 is the access management component of any one of Examples 1 to 6, wherein the non-public network is a stand-alone non-public network and/or a public network integrated non-public network integrated into the mobile communication network.

Example 8 is the access management component of any one of Examples 1 to 7, wherein the usage and/or availability of the one or more communication services includes usage and/or availability of a local area data network.

Example 9 is the access management component of any one of Examples 1 to 8, wherein the registration request includes an indication that the mobile terminal supports usage of the non-public network and the determiner is configured to determine whether the mobile terminal is to use one or more communication services by means of a non-public network in accordance with a policy of the operator of the mobile communication network.

Example 10 is the access management component of any one of Examples 1 to 9, wherein the message specifies that for usage and/or availability of the one or more communication services the mobile terminal is to register to the non-public network or access the one or more communication services via the non-public network by means of a UE Route Selection Policy and/or an availability information.

Example 11 is the access management component of any one of Examples 1 to 10, wherein the transmitter is configured to transmit a registration accept message or a registration reject message to the mobile terminal which includes an indication to access the one or more communication services by means of the non-public network and/or register to the non-public network.

Example 12 is a method for controlling usage of a mobile communication system including receiving a registration request from a mobile terminal, determining whether the mobile terminal is to use one or more communication services by means of a non-public network and transmitting a message to the mobile terminal specifying that for usage and/or availability of the one or more communication services, the mobile terminal is to register to the non-public network or access the one or more communication services via the non-public network if the mobile terminal is to use the one or more communication services by means of the non-public network.

Example 13 is the method of Example 12, wherein the mobile communication network is a public network.

Example 14 is the method of Example 12 or 13, wherein the one or more communication services are services which are not available to the mobile terminal via the mobile communication network.

Example 15 is the method of any one of Examples 12 to 14, wherein the one or more communication services are services restricted for usage to the non-public network.

Example 16 is the method of any one of Examples 12 to 15, including determining that the mobile terminal is to use the one or more communication services by means of the non-public network if the communication quality provided by the mobile communication network at the location of the mobile terminal is below a predetermined threshold.

Example 17 is the method of any one of Examples 12 to 16, wherein the registration request includes an indication that the mobile terminal supports usage of the non-public network and the method includes determining that the mobile terminal is to use one or more communication services by means of a non-public network or steer the mobile terminal to a non-public network at least partially in reaction to the indication.

Example 18 is the method of any one of Examples 12 to 17, wherein the non-public network is a stand-alone non-public network and/or a public network integrated non-public network integrated into the mobile communication network.

Example 19 is the method of any one of Examples 12 to 18, wherein the usage and/or availability of the one or more communication services includes usage and/or availability of a local area data network.

Example 20 is the method of any one of Examples 12 to 19, wherein the registration request includes an indication that the mobile terminal supports usage of the non-public network and the method includes determining whether the mobile terminal is to use one or more communication services by means of a non-public network in accordance with a policy of the operator of the mobile communication network.

Example 21 is the method of any one of Examples 12 to 20, wherein the message specifies that for usage and/or availability of the one or more communication services the mobile terminal is to register to the non-public network or access the one or more communication services via the non-public network by means of a LTE Route Selection Policy and/or an availability information.

Example 22 is the method of any one of Examples 12 to 21, including transmitting a registration accept message or a registration reject message to the mobile terminal which includes an indication to access the one or more communication services by means of the non-public network and/or register to the non-public network.

Example 23 is a mobile terminal including a transmitter configured to transmit a first registration request to a mobile communication network and a receiver configured to receive a message from the mobile communication network specifying that for usage and/or availability of one or more communication services, the mobile terminal is to register to a non-public network or access the one or more communication services via the non-public network, wherein the transmitter is configured to transmit a second registration request to the non-public network, wherein it provides an identifier of the mobile terminal which identifies the mobile terminal in the mobile communication network to the non-public network.

Example 24 is a method for using a communication service including transmitting a first registration request to a mobile communication network, receiving a message from the mobile communication network specifying that for usage and/or availability of one or more communication services, the mobile terminal is to register to a non-public network or access the one or more communication services via the non-public network and transmitting a second registration request to the non-public network, wherein an identifier of the mobile terminal which identifies the mobile terminal in the mobile communication network is provided to the non-public network.

It should be noted that one or more of the features of any of the examples above may be combined with any one of the other examples.

According to further embodiments, a computer program and a computer readable medium including instructions, which, when executed by a computer, make the computer perform the method of any one of the above examples are provided.

In the following, various examples will be described in more detail.

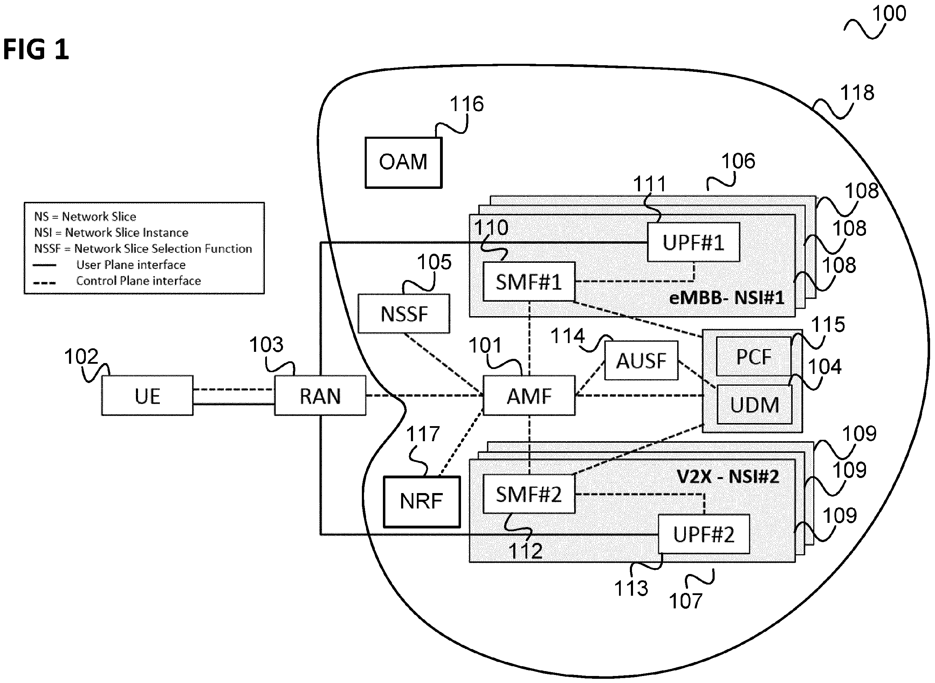

Figure 1 shows a radio communication system 100.

The radio communication system 100 includes a mobile radio terminal device 102 such as a LTE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual LTE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

According to 3GPP (Third Generation Partnership Project), it is discussed to provide 5G non-public networks.

In contrast to a network that offers mobile network services to the general public, a 5G non-public network (NPN, also sometimes called a private or campus network) provides 5G network services to a clearly defined user organisation or group of organisations. The 5G non-public network is deployed on the organisation's defined premises, such as a campus or a factory. Non-public networks can for example be desirable because of:
- High quality-of-service requirements;
- High security requirements, met by dedicated security credentials;
- Isolation from other networks, as a form of protection against malfunctions in the public mobile network. Also, isolation may be desirable for reasons of performance, security, privacy, and safety;
- Accountability. A non-public network makes it easier to identify responsibility for availability, maintenance, and operation.

A 5G NPN may be deployed as a Standalone Non-Public Network (SNPN) or as a Public Network Integrated NPN (PNI-NPN).

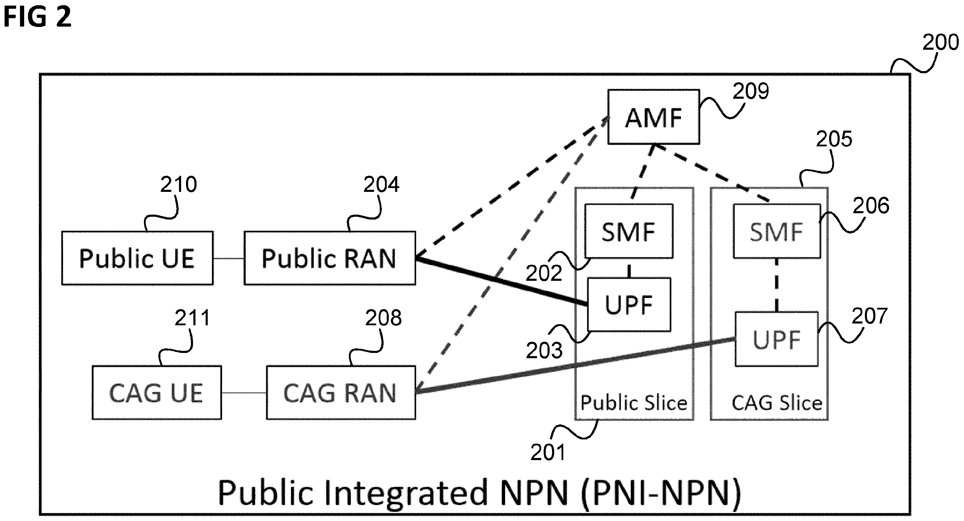

Figure 2 shows a public integrated NPN (PNI-NPN) 200.

In a public network integrated NPN deployment a non-public network is deployed in conjunction with one or more public network functions. This deployment is a combination of public and non-public networks. These scenarios assume that certain use cases on the defined premises can be supported entirely by the public network, whereas others require a dedicated NPN. There are therefore two network parts, one public and one non-public, with traffic assigned to the appropriate part.

In the example of figure 2, the public network part includes a public core network slice 201, e.g. including an SMF 202 and a UPF 203, and a public RAN 204. The non-public network part includes a CAG (Closed Access Group) core network slice 205, e.g. including an SMF 206 and a UPF 207, and a CAG RAN 208. In this example, there is an AMF 209 belonging to both parts. Alternatively to the implementation of a CAG by one or more network slices allocated to the NPN, one or more dedicated DNNs (data network names) may be used to deploy an PNI-NPN. In a CAG cell (operated by CAG RAN 208) one or more CAG identifiers are broadcast per PLMN, for example together with the respective PLMN ID in a system information block (SIB), e.g. CAG ID = 1 and PLMN ID = A in the example of a CAG and a PLMN as in figure 2.

A Closed Access Group (CAG) identifies a group of subscribers (and corresponding LTEs) who are permitted to access one or more CAG cells (i.e. radio cells of CAG RAN 208) associated with the CAG (wherein it is possible that the one or more CAG cells are associated with multiple CAGs including the CAG).

A CAG may be used for a Public Network Integrated NPN 200 to prevent UE(s), which are not allowed to access the NPN via the associated CAG cell(s), from automatically or manually selecting and accessing the associated CAG cell(s).

A "public" LTE 210 may use the public network, i.e. register with the public part and establish communication sessions via the public part.

A CAG LTE 211, i.e. a UE 102 which has access rights to the NPN may use the NPN, i.e. register with the private part and establish communication sessions via the private part (e.g. to exchange useful information). In addition, the CAG LTE 211 may also use the public network i.e. register with the public part and establish communication sessions via the public part.

It should be noted that a CAG LTE 211 may also be a CAG-only LTE, i.e. a LTE which may only connect to the CAG (or a list of CAGs) but is not allowed to connect to public PLMN.

The NPN and the public network may share part of a radio access network, while other network functions remain segregated. In that case, all data flows related to the NPN traffic portion are within the logical perimeter of the defined premises, e.g. factory, and the public network traffic portion is transferred to the public network. It should be noted that 3GPP specifications include functionality that enables RAN sharing. It is possible to configure additional base stations that are only accessible by NPN users.

For example, a public operator provides dedicated CAG-RAN and CN functions to a specific enterprise. The CAG-RAN 208 broadcasts the CAG IDs in the RRC, so that only CAG UEs 211 tries for a connection with the private part. Non-CAG UEs 210 (Public UEs) know the respective radio cell is dedicated to CAG (by broadcast message) and consequently do not try to connect to the private part.

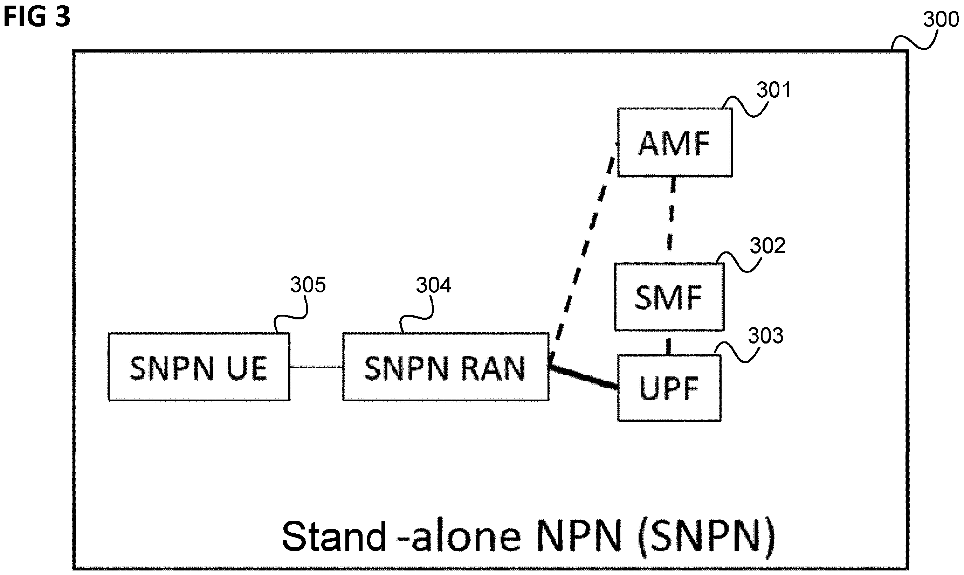

Figure 3 shows a stand-alone NPN (SNPN) 300.

In a standalone non-public network (isolated deployment), the NPN is deployed as an independent, standalone network. All 5G network functions, in this example an AMF 301, an SMF 302 and a UPF 303 as well as the SNPN RAN 304 are located inside the logical perimeter of the defined premises (e.g. factory) and the NPN 300 is separate from the public network. The only communication path between the NPN and the public network is via a firewall. The firewall is a clearly defined and identifiable demarcation point. The operator of the NPN has sole and exclusive responsibility for operating the NPN and for all service attributes up to this point.

The public operator does not have any role in the SNPN i.e. an enterprise can have its deployment with dedicated spectrum without relay public operators.

An SNPN UE 305, i.e. a LTE 102 which has access rights to the SNPN 300 may use the SNPN 300, i.e. register with the SNPN 300 and establish communication sessions via the SNPN 300.

An SNPN-enabled UE 305 may support an SNPN access mode (which is different from PLMN selection mode). The SNPN RAN 304 broadcasts a "PLMN ID" and a "NID". PLMN IDs can be based on mobile country code (MCC) 999 as assigned by ITU (International Telecommunication Union).

An SNPN is based on 3GPP-defined technologies and is entirely independent with its own dedicated SNPN ID. An optional connection to public network services via a firewall can be employed to enable access to public network services, such as voice, while within NPN coverage. Alternatively, NPN devices (LTEs) can subscribe directly to the public network to access its services (dual subscription). If desired, the optional connection can be leveraged to access NPN services via the public network. Furthermore, the NPN operator can conclude roaming agreements with one or more public network operators, and the optional connection also be used for this purpose. Roaming agreements with public networks may entail technical constraints, depend on the specific use case.

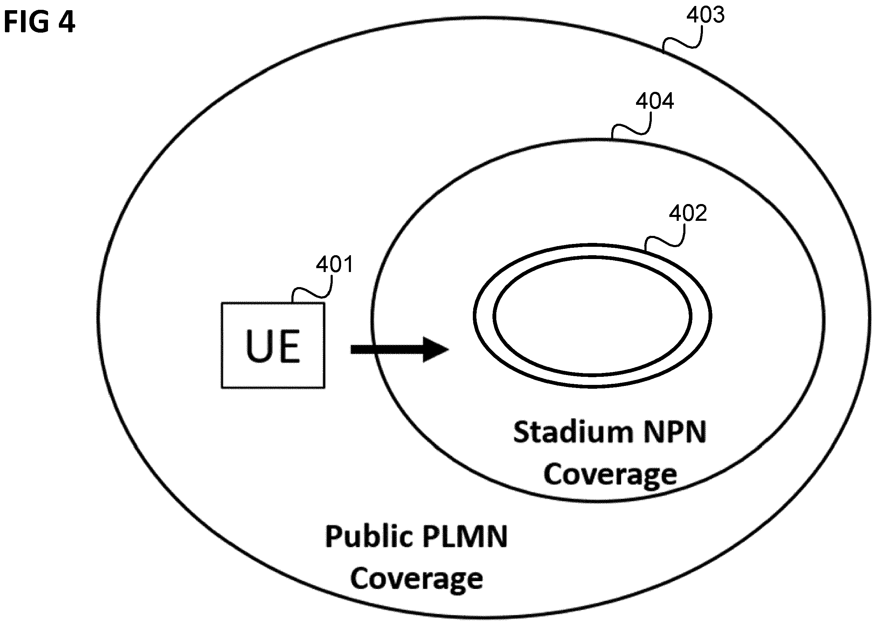

Figure 4 illustrates a use case of an NPN.

In the example of figure 4, a LTE 401 is in the vicinity of a stadium 402 and is located in the coverage area 403 of a PLMN.

The stadium 402 has an NPN, i.e. is located in the coverage area 404 of an NPN. The NPN coverage 404 includes one or more CAG cells.

It is assumed that an NPN-based application service (i.e. communication service) is provided. This means that the NPN provides a dedicated service in the NPN coverage area 404 which is not provided by the PLMN. This is to be understood that while the PLMN may be used for communication services like making a call in the stadium, there are one or communication more services which the LTE 401 should only be able to use when being registered in the NPN 404, such as a live stream of a match in the stadium. This means that a stadium (communication) service (such as a live stream) should only be available inside the stadium 402, or possibly even only in a part of the stadium 402, such as VIP area.

The PLMN can provide other services e.g. eMBB and other internet services around the country (including the NPN coverage 404).

The LTE 401 can move between NPN coverage 404 and public PLMN coverage 403 to use a respective service. This means that if the LTE 401 is located in the NPN coverage 404 it may choose whether to register with the PLMN 403 or the NPN 404 (or possible both at the same time if the UE 401 supports it) depending on the communication service its user wants to use.

Other examples of such NPN-based services are a control service for robots which should only work in a factory (i.e. in a factors NPN) or secure email access which should only work in an office (i.e. in an office NPN).

According to various embodiments as described below, in addition to the definition of access restrictions, a LTE is provided with application availability information such that the LTE has knowledge which application or applications are available in which NPN(CAG) cell. In particular, approaches are described how the mobile communication network (e.g. the PLMN) notifies the LTE about application availability in one or more CAG cells.

Similarly to the restriction of provision of an NPN-based service, i.e. restriction of a communication service to an NPN, it may be desirable to deploy a so-called Local Area Data Network (LADN) which is a data network (DN) that is accessible by UEs only in specific locations.

According to various embodiments, rather than having a granularity of a LADN service area (SA) of a set of tracking areas, a LADN is made accessible only in a one or more CAGs, i.e. a LADN may be provide with a granularity of CAG cells. Thus, it is in particular not necessary to provide tracking area level information. The same mechanisms as for NPN-based services (in particular in the LTE) may be thus be used for providing LADNs (on CAG level).

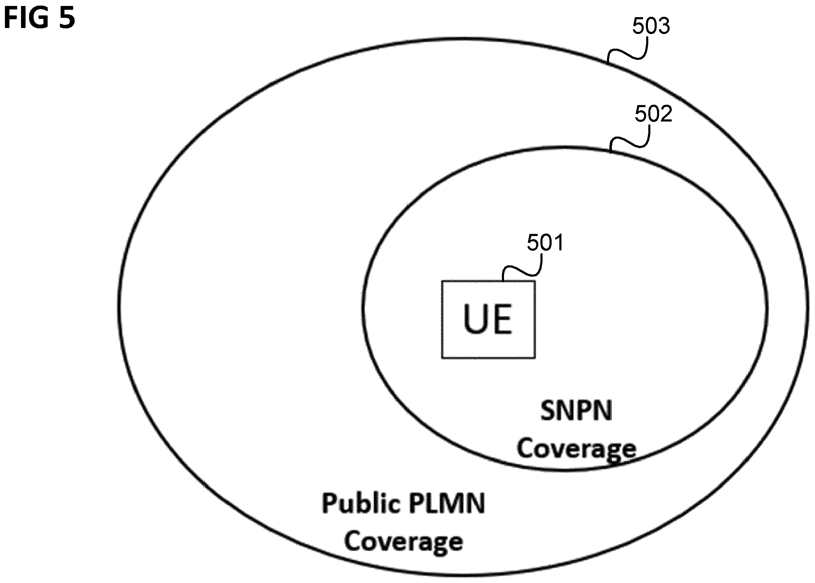

Figure 5 illustrates a further use case.

A LTE 501 is located in the coverage area 502 of an SNPN which is itself included in the coverage area 503 of a PLMN.

It may occur that in some areas of the PLMN coverage 503 the coverage is bad or capacity is low (e.g. inside the concert hall). In fact, the operator of the PLMN may have no interest to enhance coverage in those areas as there may be little economic benefit. In those areas, the coverage by the SNPN may be better.

According to various embodiments, approaches are described that allow the PLMN render resources from the SNPN by steering the LTE 501 to the SNPN.

In the following exemplary approaches for addressing the use cases of figures 4 and 5 are described.

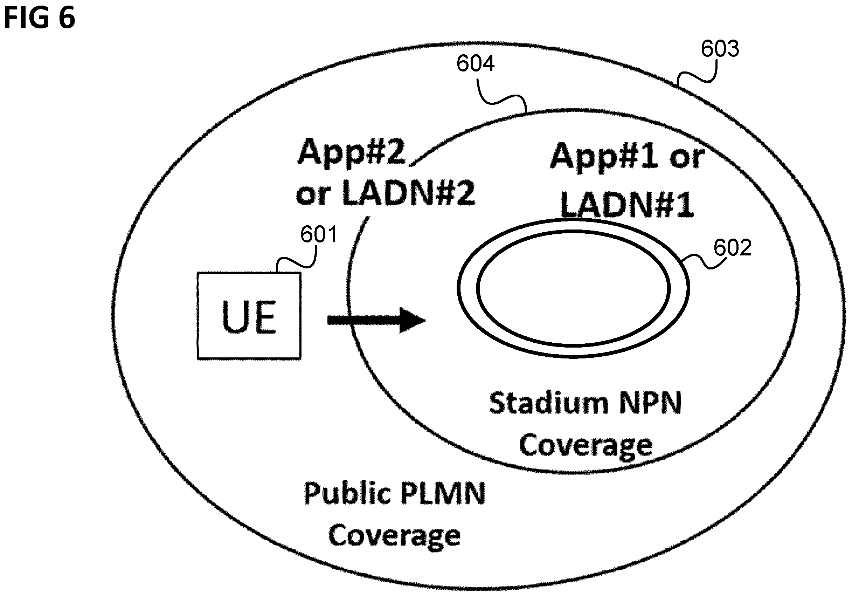

Figure 6 shows an example of applications and LADNs available in a PLMN and/or in an NPN.

Similarly to the example of figure 4, a LTE 601, e.g. corresponding to LTE 102, is in the vicinity of a stadium 602 and is located in the coverage area 603 of a PLMN.

The stadium 602 has an NPN, i.e. is located in the coverage area 604 of an NPN. The NPN coverage area 604 includes a first CAG cell (CAG#1) and a second CAG cell (CAG#2).

It is assumed that a first application (App#1) and/or a first LADN (LADN#1) should be only available in the first CAG cell (CAG#1), which may cover the whole stadium 602 or possibly only a part of the stadium 602, like a VIP area.

A second application (App#2) and/or a second LADN (LADN#2) should be available in both the public PLMN and the NPN.

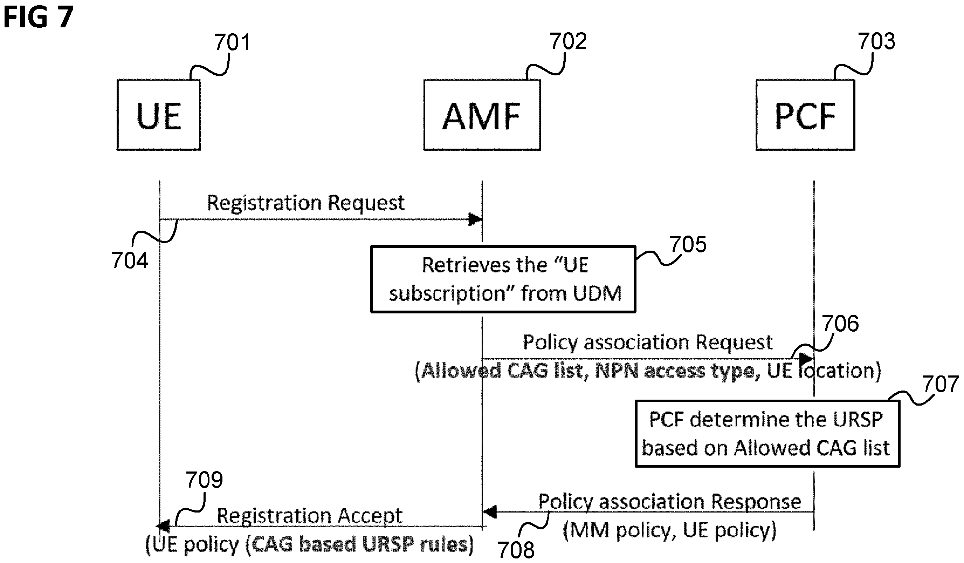

Figure 7 shows a message flow diagram 700 for managing application availability in the scenario of figure 6.

The message flow takes place between a LTE 701, for example corresponding to UE 601, an AMF 702, for example corresponding to AMF 101 and/or AMF 209, and a PCF 703, for example corresponding to PCF 115 (e.g. the PCF of the PLMN to which AMF 209 belongs).

In 704, the LTE 701 sends a registration request to the AMF 702 to initiate a registration procedure of the LTE 701 in the PLMN.

In 705, e.g. as part of registration procedure, the AMF 702 retrieves the LTE's subscription from a UDM (e.g. UDM 104).

In 706, during or after the registration procedure, AMF 702 communicates with the PCF 703 to determine the LTE policy, i.e. the policy which is to be applied for the LTE, by sending a policy association request. With this request, the AMF 702 provides the Allowed CAG list, UE location, Subscribed S-NSSAI and Allowed NSSAI for the UE 701 to the PCF 703.

In this example, URSP (LTE Route Selection Policy) is used for managing application availability. URSP may for be used by a LTE to determine whether a detected application can be associated to an established PDU Session, can be offloaded to non-3GPP access outside a PDU Session, or can trigger the establishment of a new PDU Session (i.e. to determine the PDU Session parameters). A URSP rule includes one Traffic descriptor that specifies the matching criteria. During a LTE's registration, the PCF determines the URSP rules based on LTE subscription and other local policy and sends them to the LTE.

Accordingly, in the example of figure 7, in 707, the PCF 703 determines that NPN-based URSP is needed. The PCF 703 derives this from the LTE's Allowed CAG list, which is assumed to include the CAG cells CAG#1 and CAG#2.

From a local policy (defined by the operator for the scenario of figure 6), the PCF 703 determines that App#1 is only to be accessed via CAG#1 (not from a PLMN cell) and that App#2 is allowed to be accessed via both CAG#2 and a PLMN cell.

The PCF 703 provides the UE policy (including the determined URSP) to the UE 701 via the AMF 702 in 708 und 709. For example, the AMF 702 sends the UE policy to the UE with a registration accept in 709.

An alternative procedure is for example that the PCF 703 triggers a UE configuration update procedure and sends the URSP rules it has derived from CAG information

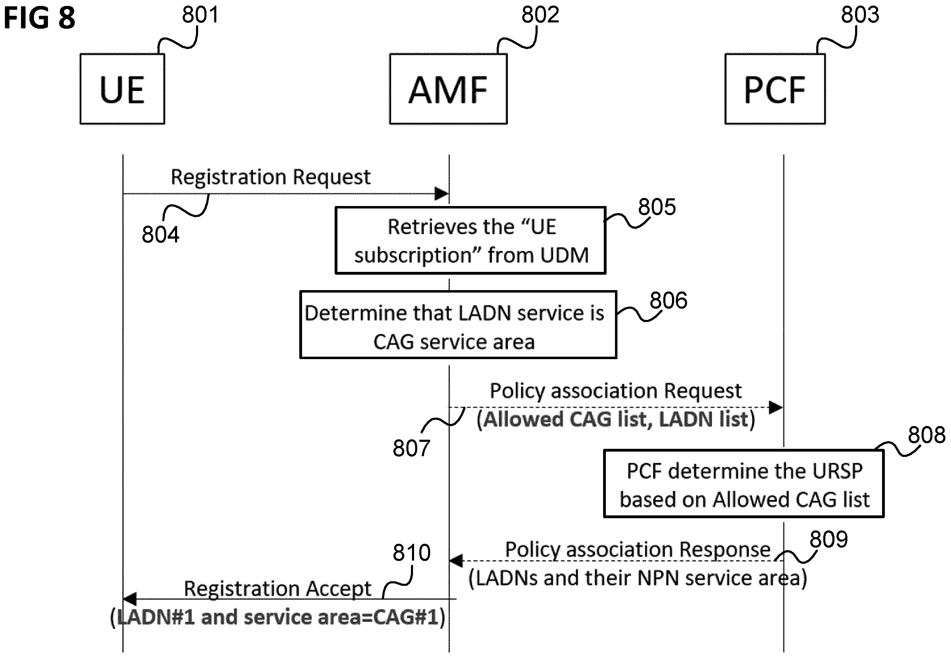

Figure 8 shows a message flow diagram 800 for managing LADN availability in the scenario of figure 6.

As in figure 7, the message flow takes place between a LTE 801, for example corresponding to LTE 601, an AMF 802, for example corresponding to AMF 101 and/or AMF 209, and a PCF 803, for example corresponding to PCF 115 (e.g. the PCF of the PLMN to which AMF 209 belongs).

In 804, the LTE 801 sends a registration request to the AMF 802 to initiate a registration procedure of the LTE 801 in the PLMN.

In 805, e.g. as part of registration procedure, the AMF 802 retrieves the LTE's subscription from a UDM (e.g. UDM 104).

In 806, during or after the registration procedure, the AMF 802 determines, from the LTE's subscription and operator policy the LTE's allowed CAG list and the LADNs associated with the CAG cells allowed for the UE. For example, the AMF 802 sends the Allowed CAG list and associated LADN(s) to the LTE 801 with a Registration Accept including an indication that LADN#1 service area is equal the CAG#1 service area. With this information, the LTE 801 knows that LADN#1 is only available in a specific CAG cell (CAG#1), not in public. For LADN#2, which is available in both PLMN and NPN. In 807, alternatively, the AMF 802 provides the LTE's Allowed CAG list and the associated LADNs to the PCF 803 with a policy association request.

In 808, the PCF 803 determines that NPN-based URSP is needed. The PCF 803 derives this from the LTE's allowed CAG list and the associated LADNs.

For example, from a local policy defined by the operator for the scenario of figure 6, the PCF 803 determines that
- LADN#1 is only to be accessed via CAG#1, not from a PLMN public cell and/or
- LADN#2 is allowed to be accessed via both CAG#2 and the PLMN

In 809 and 810 the PCF 803 provides the determined URSP to the LTE 801.

The AMF and/or PCF for example provide to the LTE 801 the public PLMN LADN availability area and also associated NPN address.

Table 1 shows an example of the URSP rules for the two examples of figures 7 and 8.

**Table 1**

| URSP rules | |
|---|---|
| Traffic descriptor: App#1 | This URSP rule associates the traffic of application " App#1" with S-NSSAI-a, SSC Mode 3, the "campus" DNN, 3GPP Access and CAG#1 |
| Route Selection Descriptor Precedence=1 | |
| Network Slice Selection: S-NSSAI-b | |
| SSC Mode Selection: SSC Mode 3 | |
| DNN Selection: campus | App#1 is only accessible via CAG#1 coverage |
| Access Type preference: 3GPP access | |
| Network type: CAG#1 | |
| Traffic descriptor: App#2 | App#2 is accessible via both CAG#2 and PLMN#A |
| Route Selection Descriptor Precedence=1 | |
| Network type: CAG#2 and PLMN#A | |
| Traffic descriptor: LADN#1 | LADN#1 is only available in CAG#1 |
| Route Selection Descriptor Precedence=1 | |
| Network type: CAG#2 | |

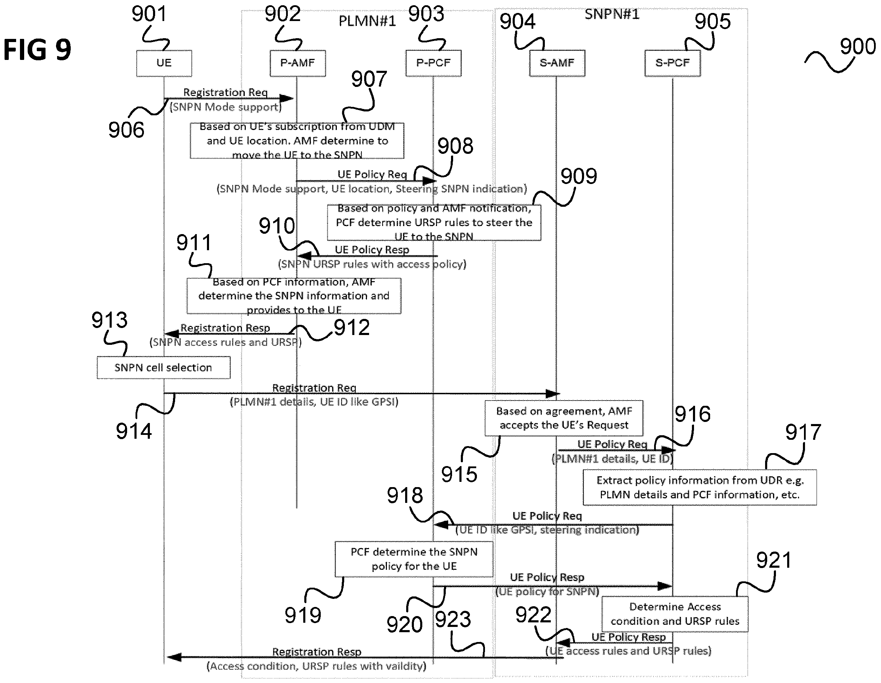

Figure 9 shows a message flow diagram 900 for steering a LTE 901 from a PLMN to an SNPN.

The message flow takes place between the LTE 901, for example corresponding to LTE 501, a PLMN AMF (P-AMF) 902, for example corresponding to AMF 101, a PLMN PCF (P-PCF) 903, for example corresponding to PCF 115, an SNPN AMF (S-AMF) 904, for example corresponding to SMF 302 and an SNPN PCF (S-PCF) 905, for example corresponding to a PCF of SNPN 300.

It is assumed that the operator of the PLMN has an agreement with the operator of the SNPN. The PLMN knows the SNPN access credentials, SNPN service area, etc.

In 906, the LTE 901 sends a registration request to the P-AMF 902. It indicates in the registration request that it supports SNPN usage (i.e. has SNPN capability or SNPN mode support).

In 907, from the LTE SNPN capability and LTE location, the PLMN (specifically for example P-AMF 902) determines whether to move LTE 901 to the SNPN based on the local PLMN policy.

In the present example, it is assumed that the P-AMF 902 decides to steer the LTE 901 to the SNPN.

In 908 the P-AMF 902 may send a UE policy request to the P-PCF 903.

In 909, the P-PCF 903 determines, from a policy defined for the scenario of figure 5 and AMF notification (included in the LTE policy request specifying that the UE should be steered to SNPN) URSP rules to steer the LTE to the SNPN which it provides to the P-AMF 902 in 910 with a UE policy response.

In 911, the P-AMF 902 determines SNPN access information (including the URSP rules from the P-PCF 903 and for example SNPN access credentials) and provides it to the LTE 901 in 912, for example with a registration response or registration accept or registration reject with an indication to registered the SNPN. In particular, the P-AMF 902 notifies the LTE 901 to use the SNPN. In addition, the P-AMF 902 provides all credential and information needed for the SNPN network selection and registration to the LTE.

In 913, in accordance with this steering notification, the LTE 901 performs cell selection and select SNPN access.

In 914, the LTE 901 sends a registration request to the S-AMF 904 including the PLMN details and its ID e.g. like its GPSI (Generic Public Subscription Identifier).

In 915, in line with the agreement between the PLMN operator and the SNPN operator, the S-AMF 904 accepts the LTE's registration request.

In 916, the S-AMF 904 requests the LTE policy from the S-PCF 905.

In 917, the S-PCF 905 extracts policy information from the SNPN's UDR, e.g. PLMN details and PCF, etc.

In addition, in 918, 919 and 920, the SNPN network (specifically for example the S-PCF 905) gets the LTE information and policy from the PLMN (specifically for example the P-PCF 903).

In 921, the S-PCF 905 determines the LTE access condition and session rules (e.g. in the form of URSP rules) and provides them to the LTE 901 via the S-AMF 904 in 922 and 923 (and for example with a registration response sent in 923 from the S-AMF 904 to the UE 901). The URSP rules maybe time bond or location bond e.g. if a LTE 901 moves out of the specified location, the URSP shall not be used .

In line with the information provided from the SNPN, in particular the URSP rules, the LTE establishes a communication session (e.g. PDU session) with the SNPN.

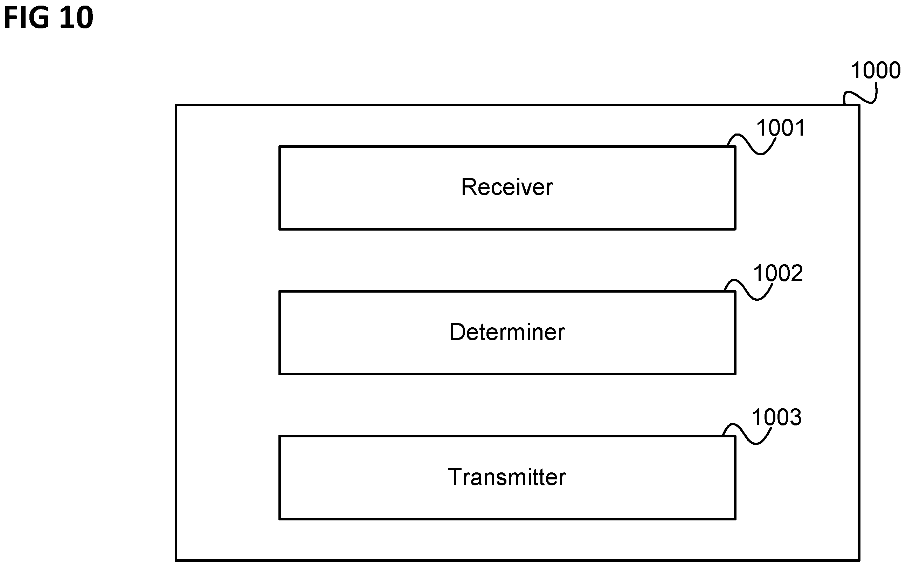

In summary, according to various embodiments, an access management component of a mobile communication network is provided as illustrated in figure 10.

Figure 10 shows an access management component 1000 of a mobile communication network (e.g. a PLMN).

The access management component 1000 includes a receiver 1001 configured to receive a registration request from a mobile terminal.

Further, the access management component includes a determiner 1002 configured to determine whether the mobile terminal is to use one or more communication services by means of a non-public network.

The access management component 1000 further includes a transmitter 1003 configured to transmit a message to the mobile terminal specifying that for usage and/or availability of the one or more communication services, the mobile terminal is to register to the non-public network or access the one or more communication services via the non-public network if (i.e. if the determiner has determined that) the mobile terminal is to use the one or more communication services by means of the non-public network (i.e. that the mobile terminal is to use the one or more communication services via the non-public network).

According to various embodiments, the network side of a mobile communication network detects that a mobile terminal should move to a non-public network, e.g. because a certain service is only allowed to be used in the non-public network or due to load balancing reasons. It then notifies the mobile terminal accordingly.

The approach of figure 10 may for example be applied for NPN application availability notification and/or steering LTEs between PLMN and SNPN.

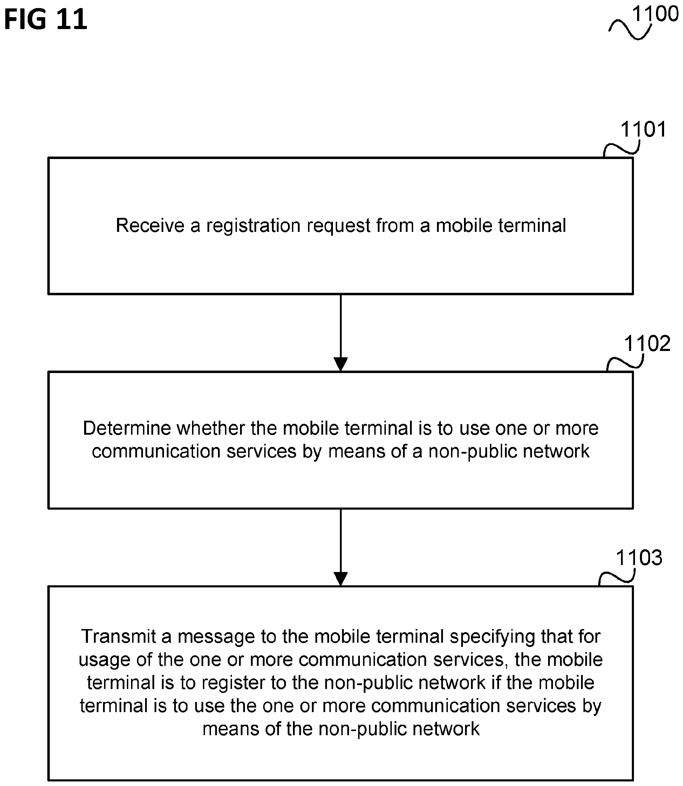

According to one embodiment, a method as illustrated in figure 11 is carried out.

Figure 11 shows a flow diagram 1100 illustrating a method for controlling usage of a mobile communication system.

In 1101, a registration request is received from a mobile terminal.

In 1102, it is determined whether the mobile terminal is to use one or more communication services by means of a non-public network.

In 1103, a message is transmitted to the mobile terminal specifying that for usage and/or availability of the one or more communication services, the mobile terminal is to register to the non-public network or access the one or more communication services via the non-public network if the mobile terminal is to use the one or more communication services by means of the non-public network.

The mobile communication system includes a mobile communication network (e.g. a PLMN), which for examples receives the request from the mobile terminal, and includes the non-public network (which may or may not be a standalone network, i.e. independent or not from the mobile communication network).

According to a further embodiment, a mobile terminal configured to receive the message from the access management component and to register in the non-public network in accordance with the message as well as a corresponding method are provided.

The components of the mobile terminal and the access management component (e.g. receiver, determiner, transmitter etc.) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. An access management component (1000) of a mobile communication network comprising:
a receiver (1001) configured to receive a registration request (704, 804, 906) from a mobile terminal (102, 701, 801, 901);
a determiner (1002) configured to determine whether the mobile terminal (102, 701, 801, 901) is to use one or more communication services by means of a non-public network (200, 300) if the communication quality provided by the mobile communication network at the location of the mobile terminal (102, 701, 801, 901) is below a predetermined threshold; and
a transmitter (1003) configured to transmit a message (709, 810, 912) to the mobile terminal (102, 701, 801, 901) specifying that for usage and/or availability of the one or more communication services, the mobile terminal (102, 701, 801, 901) is to register to the non-public network (200,300) or access the one or more communication services via the non-public network (200, 300) if the mobile terminal (102, 701, 801, 901) is to use the one or more communication services by means of the non-public network (200;300).

2. The access management component (1000) of claim 1, wherein the mobile communication network is a public network.

3. The access management component (1000) of claim 1 or 2, wherein the one or more communication services are services which are not available to the mobile terminal (102, 701, 801, 901) via the mobile communication network.

4. The access management component (1000) of any one of claims 1 to 3, wherein the one or more communication services are services restricted for usage to the non-public network (200, 300).

5. The access management component (1000) of any one of claims 1 to 4, wherein the registration request (704, 804, 906) comprises an indication that the mobile terminal (102, 701, 801, 901) supports usage of the non-public network (200, 300) and the determiner (1002) is configured to determine that the mobile terminal (102, 701, 801, 901) is to use one or more communication services by means of a non-public network (200, 300) or steer the mobile terminal (102, 701, 801, 901) to a non-public network (200,300) at least partially in reaction to the indication.

6. The access management component (1000) of any one of claims 1 to 5, wherein the non-public network is a stand-alone non-public network (300) and/or a public network integrated non-public network (200) integrated into the mobile communication network.

7. The access management component (1000) of any one of claims 1 to 6, wherein the usage and/or availability of the one or more communication services comprises usage and/or availability of a local area data network.

8. The access management component (1000) of any one of claims 1 to 7, wherein the registration request (704, 804, 906) comprises an indication that the mobile terminal (102, 701, 801, 901) supports usage of the non-public network (200, 300) and the determiner (1002) is configured to determine whether the mobile terminal (102, 701, 801, 901) is to use one or more communication services by means of a non-public network (200, 300) in accordance with a policy of the operator of the mobile communication network.

9. The access management component (1000) of any one of claims 1 to 8, wherein the message (709, 810, 912) specifies that for usage and/or availability of the one or more communication services the mobile terminal (102, 701, 801, 901) is to register to the non-public network (200, 300) or access the one or more communication services via the non-public network (200, 300) by means of a UE Route Selection Policy and/or an availability information.

10. The access management component (1000) of any one of claims 1 to 9, wherein the transmitter (1003) is configured to transmit a registration accept message or a registration reject message to the mobile terminal (102, 701, 801, 901) which comprises an indication to access the one or more communication services by means of the non-public network and/or register to the non-public network.

11. A method (1100) for controlling usage of a mobile communication system performed by an access management component (1000) of a mobile communication network, the method comprising:
receiving (1101) a registration request (704, 804, 906) from a mobile terminal (102, 701, 801, 901);
determining (1102) whether the mobile terminal (102, 701, 801, 901) is to use one or more communication services by means of a non-public network (200, 300) if the communication quality provided by the mobile communication network at the location of the mobile terminal (102, 701, 801, 901) is below a predetermined threshold; and
transmitting (1103) a message (709, 810, 912) to the mobile terminal (102, 701, 801, 901) specifying that for usage and/or availability of the one or more communication services, the mobile terminal (102, 701, 801, 901) is to register to the non-public network (200, 300) or access the one or more communication services via the non-public network (200, 300) if the mobile terminal (102, 701, 801, 901) is to use the one or more communication services by means of the non-public network (200, 300).

## Patentansprüche

1. Eine Zugriffsmanagementkomponente (1000) eines Mobilkommunikationsnetzwerks, umfassend:
einen Empfänger (1001), der konfiguriert ist, um eine Registrierungsanfrage (704, 804, 906) von einem Mobilendgerät (102, 701, 801, 901) zu empfangen;
einen Ermittler (1002), der konfiguriert ist, um zu ermitteln, ob das Mobilendgerät (102, 701, 801, 901) einen oder mehrere Kommunikationsdienste mittels eines nicht-öffentlichen Netzwerks (200, 300) verwenden soll, wenn die Kommunikationsqualität, die mittels des Mobilkommunikationsnetzwerks an dem Ort des Mobilendgeräts (102, 701, 801, 901) bereitgestellt wird, unter einem vorbestimmten Grenzwert ist; und
einen Sender (1003), der konfiguriert ist, um eine Nachricht (709, 810, 912) an das Mobilendgerät (102, 701, 801, 901) zu senden, die festlegt, dass für Verwendung und/oder Verfügbarkeit der einen oder mehreren Kommunikationsdienste, das Mobilendgerät (102, 701, 801, 901) sich bei dem nicht-öffentlichen Netzwerk (200, 300) registrieren oder auf die einen oder mehreren Kommunikationsdienste über das nicht-öffentliche Netzwerk (200, 300) zugreifen soll, wenn das Mobilendgerät (102, 701, 801, 901) die einen oder mehreren Kommunikationsdienste mittels des nicht-öffentlichen Netzwerks (200, 300) verwenden soll.

2. Die Zugriffsmanagementkomponente (1000) gemäß Anspruch 1, wobei das Mobilkommunikationsnetzwerk ein öffentliches Netzwerk ist.

3. Die Zugriffsmanagementkomponente (1000) gemäß Anspruch 1 oder 2, wobei die einen oder mehreren Kommunikationsdienste Dienste sind, die dem Mobilendgerät (102, 701, 801, 901) über das Mobilkommunikationsnetzwerk nicht zur Verfügung stehen.

4. Die Zugriffsmanagementkomponente (1000) gemäß einem der Ansprüche 1 bis 3, wobei die einen oder mehreren Kommunikationsdienste Dienste sind, die für die Verwendung auf das nicht-öffentliche Netzwerk (200, 300) beschränkt sind.

5. Die Zugriffsmanagementkomponente (1000) gemäß einem der Ansprüche 1 bis 4, wobei die Registrierungsanfrage (704, 804, 906) eine Angabe umfasst, dass das Mobilendgerät (102, 701, 801, 901) Verwendung des nicht-öffentlichen Netzwerks (200, 300) unterstützt und der Ermittler (1002) konfiguriert ist, um zu ermitteln, dass das Mobilendgerät (102, 701, 801, 901) einen oder mehrere Kommunikationsdienste mittels eines nicht-öffentlichen Netzwerks (200, 300) verwenden oder das Mobilendgerät (102, 701, 801, 901) zu einem nicht-öffentlichen Netzwerk (200, 300) zumindest teilweise in Reaktion auf die Angabe steuern soll.

6. Die Zugriffsmanagementkomponente (1000) gemäß einem der Ansprüche 1 bis 5, wobei das nicht-öffentliche Netzwerk ein eigenständiges nicht-öffentliches Netzwerk (300) und/oder ein Öffentliches-Netzwerk-Integriertes-Nicht-Öffentliches-Netzwerk (200) ist, das in das Mobilkommunikationsnetzwerk integriert ist.

7. Die Zugriffsmanagementkomponente (1000) gemäß einem der Ansprüche 1 bis 6, wobei die Verwendung und/oder Verfügbarkeit der einen oder mehreren Kommunikationsdienste Verwendung und/oder Verfügbarkeit eines Lokaldatennetzwerks umfasst.

8. Die Zugriffsmanagementkomponente (1000) gemäß einem der Ansprüche 1 bis 7, wobei die Registrierungsanfrage (704, 804, 906) eine Angabe umfasst, dass das Mobilendgerät (102, 701, 801, 901) Verwendung des nicht-öffentlichen Netzwerks (200, 300) umfasst und der Ermittler (1002) konfiguriert ist, um zu ermitteln, ob das Mobilendgerät (102, 701, 801, 901) einen oder mehrere Kommunikationsdienste mittels eines nicht-öffentlichen Netzwerks (200, 300) gemäß einer Richtlinie des Betreibers des Mobilkommunikationsnetzwerks verwenden soll.

9. Die Zugriffsmanagementkomponente (1000) gemäß einem der Ansprüche 1 bis 8, wobei die Nachricht (709, 810, 912) festlegt, dass für Verwendung und/oder Verfügbarkeit der einen oder mehreren Kommunikationsdienste, das Mobilendgerät (102, 701, 801, 901) sich bei dem nicht-öffentlichen Netzwerk (200, 300) registrieren oder auf die einen oder mehreren Kommunikationsdienste über das nicht-öffentliche Netzwerk (200, 300) mittels einer UE-Verbindungs-Auswahl-Richtlinie und/oder einer Verfügbarkeitsinformation zugreifen soll.

10. Die Zugriffsmanagementkomponente (1000) gemäß einem der Ansprüche 1 bis 9, wobei der Sender (1003) konfiguriert ist, um eine Registrierungsannahmenachricht oder eine Registrierungsablehnungsnachricht an das Mobilendgerät (102, 701, 801, 901) zu senden, die eine Angabe umfasst, um auf die einen oder mehreren Kommunikationsdienste mittels des nicht-öffentlichen Netzwerks zuzugreifen und/oder sich bei dem nicht-öffentlichen Netzwerk zu registrieren.

11. Ein Verfahren (1100) zum Steuern einer Verwendung eines Mobilkommunikationssystems, durchgeführt mittels einer Zugriffsmanagementkomponente (1000) eines Mobilkommunikationsnetzwerks, das Verfahren umfassend:
Empfangen (1101) einer Registrierungsanfrage (704, 804, 906) von einem Mobilendgerät (102, 701, 801, 901);
Ermitteln (1102), ob das Mobilendgerät (102, 701, 801, 901) einen oder mehrere Kommunikationsdienste mittels eines nicht-öffentlichen Netzwerks (200, 300) verwenden soll, wenn die Kommunikationsqualität, die mittels des Mobilkommunikationsnetzwerks an dem Ort des Mobilendgeräts (102, 701, 801, 901) bereitgestellt wird, unter einem vorbestimmten Grenzwert ist; und
Senden (1103) einer Nachricht (709, 810, 912) an das Mobilendgerät (102, 701, 801, 901), die festlegt, dass für Verwendung und/oder Verfügbarkeit der einen oder mehreren Kommunikationsdienste, das Mobilendgerät (102, 701, 801, 901) sich bei dem nicht-öffentlichen Netzwerk (200, 300) registrieren oder auf die einen oder mehreren Kommunikationsdienste über das nicht-öffentliche Netzwerk (200, 300) zugreifen soll, wenn das Mobilendgerät (102, 701, 801, 901) die einen oder mehreren Kommunikationsdienste mittels des nicht-öffentlichen Netzwerks (200, 300) verwenden soll.

## Revendications

1. Composant de gestion d'accès (1000) d'un réseau de communication mobile, comprenant :
un récepteur (1001) configuré pour recevoir une demande d'enregistrement (704, 804, 906) d'un terminal mobile (102, 701, 801, 901) ;
un déterminant (1002) configuré pour déterminer si le terminal mobile (102, 701, 801, 901) doit utiliser un ou plusieurs services de communication au moyen d'un réseau non public (200, 300) si la qualité de communication fournie par le réseau de communication mobile à l'emplacement du terminal mobile (102, 701, 801, 901) est inférieure à un seuil prédéterminé ; et
un émetteur (1003) configuré pour transmettre un message (709, 810, 912) au terminal mobile (102, 701, 801, 901) spécifiant que pour l'utilisation et/ou la disponibilité dudit un ou desdits plusieurs services de communication, le terminal mobile (102, 701, 801, 901) doit s'enregistrer sur le réseau non public (200, 300) ou accéder audit un ou auxdits plusieurs services de communication via le réseau non public (200, 300) si le terminal mobile (102, 701, 801, 901) doit utiliser ledit un ou lesdits plusieurs services de communication au moyen du réseau non public (200 ; 300).

2. Composant de gestion d'accès (1000) selon la revendication 1, dans lequel le réseau de communication mobile est un réseau public.

3. Composant de gestion d'accès (1000) selon la revendication 1 ou 2, dans lequel ledit un ou lesdits plusieurs services de communication sont des services qui ne sont pas disponibles pour le terminal mobile (102, 701, 801, 901) via le réseau de communication mobile.

4. Composant de gestion d'accès (1000) selon l'une quelconque des revendications 1 à 3, dans lequel ledit un ou lesdits plusieurs services de communication sont des services dont l'utilisation est restreinte au réseau non public (200, 300) .

5. Composant de gestion d'accès (1000) selon l'une quelconque des revendications 1 à 4, dans lequel la demande d'enregistrement (704, 804, 906) comprend une indication que le terminal mobile (102, 701, 801, 901) soutient l'utilisation du réseau non public (200, 300), et le déterminant (1002) est configuré pour déterminer que le terminal mobile (102, 701, 801, 901) doit utiliser un ou plusieurs services de communication au moyen d'un réseau non public (200, 300) ou diriger le terminal mobile (102, 701, 801, 901) vers un réseau non public (200, 300) au moins en partie en réaction à l'indication.

6. Composant de gestion d'accès (1000) selon l'une quelconque des revendications 1 à 5, dans lequel le réseau non public est un réseau non public autonome (300) et/ou un réseau non public intégré à un réseau public (200) intégré dans le réseau de communication mobile.

7. Composant de gestion d'accès (1000) selon l'une quelconque des revendications 1 à 6, dans lequel l'utilisation et/ou la disponibilité dudit un ou desdits plusieurs services de communication comprend l'utilisation et/ou la disponibilité d'un réseau local de données.

8. Composant de gestion d'accès (1000) selon l'une quelconque des revendications 1 à 7, dans lequel la demande d'enregistrement (704, 804, 906) comprend une indication que le terminal mobile (102, 701, 801, 901) soutient l'utilisation du réseau non public (200, 300) et le déterminant (1002) est configuré pour déterminer si le terminal mobile (102, 701, 801, 901) doit utiliser un ou plusieurs services de communication au moyen d'un réseau non public (200, 300) conformément à une politique de l'opérateur du réseau de communication mobile.

9. Composant de gestion d'accès (1000) selon l'une quelconque des revendications 1 à 8, dans lequel le message (709, 810, 912) spécifie que pour l'utilisation et/ou la disponibilité dudit un ou desdits plusieurs services de communication, le terminal mobile (102, 701, 801, 901) doit s'enregistrer sur le réseau non public (200, 300) ou accéder audit un ou auxdits plusieurs services de communication via le réseau non public (200, 300) au moyen d'une politique de sélection de route de l'UE et/ou d'une information de disponibilité.

10. Composant de gestion d'accès (1000) selon l'une quelconque des revendications 1 à 9, dans lequel l'émetteur (1003) est configuré pour transmettre un message d'acceptation d'enregistrement ou un message de rejet d'enregistrement au terminal mobile (102, 701, 801, 901) qui comprend une indication d'accès audit un ou auxdits plusieurs services de communication au moyen du réseau non public et/ou d'enregistrement sur le réseau non public.

11. Procédé (1100) de contrôle d'utilisation d'un système de communication mobile exécuté par un composant de gestion d'accès (1000) d'un réseau de communication mobile, le procédé comprenant :
la réception (1101) d'une demande d'enregistrement (704, 804, 906) provenant d'un terminal mobile (102, 701, 801, 901) ;
la détermination (1102) si le terminal mobile (102, 701, 801, 901) doit utiliser un ou plusieurs services de communication au moyen d'un réseau non public (200, 300) si la qualité de communication fournie par le réseau de communication mobile à l'emplacement du terminal mobile (102, 701, 801, 901) est inférieure à un seuil prédéterminé ; et
la transmission (1103) d'un message (709, 810, 912) au terminal mobile (102, 701, 801, 901) spécifiant que pour l'utilisation et/ou la disponibilité d'un ou de plusieurs services de communication, le terminal mobile (102, 701, 801, 901) doit s'enregistrer sur le réseau non public (200, 300) ou accéder audit un ou auxdits plusieurs services de communication via le réseau non public (200, 300) si le terminal mobile (102, 701, 801, 901) doit utiliser ledit un ou lesdits plusieurs services de communication au moyen du réseau non public (200, 300).
